(19) Europäisches Patentamt
European Patent Office
Office européen des brevets

(11) **EP 2 683 184 B1**

## (12) EUROPÄISCHE PATENTSCHRIFT

(45) Veröffentlichungstag und Bekanntmachung des Hinweises auf die Patenterteilung:
**30.05.2018 Patentblatt 2018/22**

(21) Anmeldenummer: **12005027.3**

(22) Anmeldetag: **06.07.2012**

(51) Int Cl.:
***H04W 4/18*** *(2009.01)*

(54) **Verfahren zur Datenübertragung und Kommunikationssytem**

Data transmission method and communication system

Procédé de transfert de données et système de communication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.01.2014 Patentblatt 2014/02**

(73) Patentinhaber: **Telefónica Germany GmbH & Co. OHG**
**80992 München (DE)**

(72) Erfinder: **Müllner, Robert**
**81479 München (DE)**

(74) Vertreter: **Herrmann, Uwe et al**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**EP-A1- 1 237 387      EP-A1- 1 453 339**

**Beschreibung**

Die Erfindung betrifft ein Verfahren zur Datenübertragung zwischen einem auf wenigstens einem mobilen Endgerät ausgeführten Anwendungsteil und einem auf einem zentralen Server ausgeführten Anwendungsteil über ein Funknetz, insbesondere über ein Mobilfunknetz.

Mobilfunknetze werden vermehrt zur Maschine-to-Maschine (M2M)-Kommunikation verwendet, um einen automatisierten Informationsaustausch zwischen Endgeräten wie Maschinen, Automaten, Fahrzeugen oder Containern untereinander oder mit einer zentralen Leitstelle zu bewerkstelligen.

Mit der Bereitstellung hoher Datenübertragungsraten durch moderne Mobilfunkstandards wie das Universal Mobile Telecommunications System (UMTS), High Speed Packet Access (HSPA) oder Long Term Evolution (LTE) des Third Generation Partnership Projects (3GPP) wird die M2M-Kommunikation für Anwendungen interessant, die eine schnelle Übertragung großer Datenmengen innerhalb kürzester Zeit voraussetzen.

Bekannte Anwendungen für die automatisierte M2M-Kommunikation sind die Übertragung sensor- oder kameraerfasster Daten zwischen mobilen Endgeräten/Maschinen und einer zentralen Leitstelle. Beispiele hierfür sind die Übertragung von Video-Streams aus einer Front-Kamera einer bewegten Maschine, die beispielsweise an zentraler Stelle zur Überwachung der Maschine oder beispielsweise zur Erkennung von Objekten in der Maschinenumgebung der mobilen Maschine ausgewertet werden sollen.

Der komplette Datenstrom wird von der Maschinenkamera über das Mobilfunksystem zu einem zentralen Server übertragen und die Identifikation der durch die Kamera erfassten Objekte erfolgt durch eine zentral im Backend-System durchgeführte Analyse. Über den Rückkanal vom Backend-System zu einer oder mehreren Maschinen können sowohl der sendenden Maschine, als auch anderen Maschinen Informationen über konkrete Objekte übermittelt werden, die gegebenenfalls für bestimmte Maschinen von Relevanz sein können. Es lassen sich sodann frühzeitig Warnhinweise akustisch oder optisch an der Maschine ausgeben bzw. geeignete Reaktionen der Maschine auslösen.

Ein weiteres bekanntes Beispiel ist das Erkennen von gewissen Zuständen, Ereignissen, d.h. Gefahrensituationen, anhand der Video bzw. Bildaufzeichnungen. Im Backend-System erfolgt hier eine Analyse des Video-Streams und eine Identifikation von gewissen Zuständen, Ereignissen bzw. Gefahrensituationen. Die Ergebnisse lassen sich mit geographischen Informationen kombinieren und über den Rückkanal anderen Maschinen bzw. Empfängern zur Verfügung stellen.

Für die Übertragung von Kameradaten für die Objekt-, Ereignis- bzw. Zustandserkennung sind Datenraten von 350 kbit/s bis 500 kbit/s erforderlich. Diese müssen in der Richtung von der mobilen Maschine zum Backend-System, dem sogenannten Uplink, für die Übertragung des Rohdatenstroms bereitgestellt werden. Für die Gegenrichtung vom Backend-System zur mobilen Maschine, dem sogenannten Downlink, erfolgt die Übertragung ausgewerteter Daten, die in der Regel ein geringeres Datenvolumen aufweisen. Für die einzelnen Analyseverfahren sind unterschiedliche Echtzeitanforderungen vorausgesetzt, insbesondere werden strikte Anforderungen an die Gesamtdauer, bestehend aus dem Erfassen der Rohdaten, dem Übertragen zum Backend-System, dem dortigen Prozessieren der Daten sowie der Rückübertragung der ausgewerteten Informationen und deren Anzeige, gestellt. Wird dabei eine maximale Zeitdauer nicht eingehalten, so werden die mobilen Maschinen in bestimmten Fällen erst zu spät über bestimmte Ereignisse informiert.

Selbst wenn für die Übertragung von Kameradaten zwischen einem sich bewegenden Endgerät und einem Server im Internet der Mobilfunkstandard mit der momentan höchsten möglichen Datenrate zur Verfügung steht, kann unter bestimmten Umständen die für die Übertragung gewünschte maximale Dauer nicht eingehalten werden. Dies kann beispielsweise durch eine temporär geringe Zuteilung von Ressourcen für einen bestimmten Teilnehmer aufgrund von Fluktuationen der Verkehrslast im Mobilfunksystem oder durch ungünstige Übertragungsbedingungen auf der Luftschnittstelle und einer daraus erforderlichen hohen Anzahl einzelner Datenübertragungswiederholungen bedingt sein oder durch Kapazitätseinschränkungen beim Transport der Daten über die terrestrischen Schnittstellen sowie durch Kapazitätsengpässe innerhalb der Netzelemente. Für die Übertragung über die Luftschnittstelle ist bei LTE der kritische Pfad der Uplink, aufgrund der geringen Sendeleistung der Mobilstation mit typischerweise 23 dBm (200 mW) Sendeleistung für Power Class 3. Selbst in flächendeckenden LTE-Netzen kann eine Uplink-Datenrate von 350 kbit/s - 500 kbit/s nicht immer und überall aufrecht erhalten werden.

Bisher ist es bekannt, dass die Anwendung über Quality of Service (QoS) Attribute des Mobilfunknetzes eine hohe Priorität für die Übertragung der Daten durch das Mobilfunksystem anfordert. Im Falle von Ressourcenknappheit werden dabei durch das Mobilfunksystem durch unterschiedliche Gewichtung beim Scheduling und Zuteilung unterschiedlicher Bandbreite an die einzelnen Teilnehmer mehr Daten eines Datenstroms höherer Priorität übertragen, als die eines Datenstroms niedrigerer Priorität.

Die laufende Anwendung für die M2M-Kommunikation hat keine Kenntnis über die Ressourcenauslastung des Mobilfunknetzes und initiiert die Übertragung unabhängig von den Übertragungsbedingungen. Im Falle hoher Last oder schlechter Radiobedingungen dauert die Datenübertragung entsprechend länger.

Derzeit ist es bekannt, eine Anpassung des zu übertragenden Datenvolumens bei bestimmten Echtzeitdiensten (Sprachdienste, Video-Telefonie, Streaming) durch das Mobilfunksystem vorzunehmen. So werden im Radio Resource Management des Mobilfunksystems Algorithmen eingesetzt, die anhand der momentanen Last sowie der momentanen Übertragungsbedingungen für leitungsgebundene Sprachdienste entsprechende Kanäle zuweisen, die eine Übertragung von mehr oder weniger Sprachinformationen innerhalb eines bestimmten Zeitraums gewähren. Diese Algorithmen sind in den Netzelementen des Mobilfunksystems implementiert, d.h. im Base Station Controller (BSC) bei GSM und im Radio Network Controller (RNC) bei UMTS. Dabei wird die an diesen Netzelementen bekannte Last ausgewertet und über einen Vergleich mit Schwellwerten eine Entscheidung getroffen, eine geringere oder höhere Anzahl an Bits für die Sprachencodierung auf Kosten oder zu Gunsten der Sprachqualität zu verwenden. Sender und Empfänger werden über die zu verwendenden Sprachcodecs informiert.

In GSM-Netzen wird dazu eine dynamische Zuweisung von Half-Rate Kanälen durchgeführt. Hierbei werden die physikalischen Ressourcen für die Übertragung auf der Luftschnittstelle (Um) und den terrestrischen Schnittstellen Abis und Ater von zwei Teilnehmern geteilt. Mit der Einführung der in 3GPP Release 9 (GSM Phase 2) standardisierten Funktionalität VAMOS (Voice services over Adaptive Multi-user channels on One Slot) können bis zu vier Teilnehmer eine einzige physikalische Um-Ressource gemeinsam nutzen.

In UMTS-Netzen werden lastabhängig Adaptive Multi-Raten (AMR)-Sprachcodecs mit unterschiedlichen Sprachcodierungsraten zugewiesen. Die Entscheidungen über eine Anpassung der pro Zeitintervall zu übertragenden Menge an Sprachbits werden dabei jeweils in den Netzelementen des Mobilfunksystems getroffen und nicht durch die Anwendung des Dienstleistungsanbieters. Die Mobilstationen teilen lediglich ihr Fähigkeiten mit, verschiedene Sprachcodecs zu unterstützen, greifen aber ebenso wenig in die Entscheidung ein wie die zur Bereitstellung der Dienstleistung auszuführende Anwendung.

Aus der EP 1 237 387 A1 ist ein Verfahren und eine Kommunikationsvorrichtung zum Übertragen einer Datenmenge bei begrenzt möglicher Übertragungsdauer in einem Funkkommunikationssystem bekannt. Hierbei wird eine zu übertragende Datenmenge mit fester Datengröße in einzelne Teildatenmengen aufgeteilt, die während einer begrenzten Sendezeit übertragen werden. Beispielsweise kann eine erste Teildatenmenge in einer ersten Zelle übertragen werden, während die verbleibenden Teildatenmengen nach einem Handover in einer weiteren Funkzelle übertragen werden. Eine vollständige Übertragung der zu übertragenden Datenmenge wird jedoch erst nach der Übertragung der letzten Teildatenmenge erreicht.

Aufgabe der vorliegenden Erfindung ist es, ein Verfahren für die Datenübertragung, insbesondere für die Mensch-zu-Mensch- (M2M) und/oder Maschine-zu-Mensch-Kommunikation (M2P), zwischen wenigstens einer lokalen Anwendung und wenigstens einer zentralen Anwendung aufzuzeigen, dass die voranstehend beschriebene Problematik zu überwinden weiß.

Diese Aufgabe wird durch ein Verfahren gemäß den Merkmalen des Anspruchs 1 gelöst. Es wird ein Verfahren zur Datenübertragung zwischen einem auf wenigstens einem mobilen Endgerät ausgeführten lokalen Anwendungteil und einem auf einem zentralen Server ausgeführten zentralen Anwendungteil über ein Funknetz unter Schutz gestellt. Mobile Endgeräte und Server weisen Sende- und Empfangsmittel zur Funkübertragung über ein Funknetz auf bzw. stehen mit derartigen Mitteln mittelbar oder unmittelbar in Verbindung.

Als Funknetz wird insbesondere ein Mobilfunknetz eingesetzt, das beispielsweise nach einem der bekannten Mobilfunkstandards wie LTE, HSPA, HSPA+, UMTS, EDGE, GPRS oder nach einem der zukünftigen Mobilfunkstandards arbeitet.

Das Verfahren dient insbesondere für die automatisierte M2M-Kommunikation zwischen wenigstens einem mobilen Endgerät und einem zentralen Server. Beispielsweise kann wenigstens ein mobiles Endgerät sensor- oder kameraerfasste Daten zum zentralen Server versenden. Bezüglich möglicher Anwendungsbeispiele sei auf den einleitenden Teil der Beschreibung verwiesen. Die Kommunikation wird durch die ausgeführten Anwendungsteile auf den kommunizierenden Geräten, d.h. dem wenigstens einen mobilen Endgerät und dem Server, initiiert. Insbesondere ist ein bidirektionaler Kommunikationsaustausch zwischen den Anwendungsteilen notwendig. Die Anwendungsteile können software- und/oder hardwareimplementiert sein. Die Gesamtanwendung zur Ausführung des Verfahrens, im Folgenden auch der Einfachheit halber nur als Anwendung bezeichnet, setzt sich aus dem wenigstens einen lokalen Anwendungteil und dem zentralen Anwendungteil zusammen.

Erfindungsgemäß erfolgt eine anwendungsgetriebene Adaption des zu übertragenden Datenvolumens zwischen dem wenigstens einen mobilen Endgerät sowie dem wenigstens einen zentralen Server, die in Abhängigkeit von der zur Verfügung stehenden Übertragungstechnologie ausgeführt wird.

Die Adaption erfolgt in Abhängigkeit der verwendeten Übertragungstechnologie. Hierdurch kann der bereitgestellte Datendurchsatz der Technologie jederzeit für die Anwendung optimal ausgeschöpft werden.

Die zu übertragende Datenmenge bzw. das Datenvolumen ist der sendenden Anwendungsteile bekannt. Das Volumen wird beispielsweise durch die Menge der über Sensoren erfassten Daten oder die Menge an Video-Daten, die innerhalb einer bestimmten Zeitdauer für deren Auswertung am zentralen Server übertragen werden, bestimmt.

Unter einer anwendungsgetriebenen Adaption ist zu verstehen, dass die Adaption der zu übertragenden Datenvolumen nicht durch die Netzelemente des Funknetzwerkes, insbesondere des Mobilfunksystems erfolgt, sondern unabhängig von den Entscheidungen des Mobilfunksystems durch wenigstens einen der Anwendungsteile selbst ausgeführt wird. Das bedeutet, dass der serverseitig oder endgeräteseitig ausgeführte Anwendungsteil die Entscheidung trifft, welches Datenvolumen wie häufig übertragen wird. Ein Eingriff in die Entscheidungsalgorithmen des Funknetzes bzw. Mobilfunknetzes erfolgt nicht, noch wird das Funknetz bzw. stem über die getroffene Entscheidung aktiv in Kenntnis gesetzt.

Das erfindungsgemäße Verfahren ermöglicht insbesondere ein unabhängiges Agieren für Content-Service-Provider, die ihren Teilnehmern ein gewisses QoS-Level zur Verfügung stellen möchten und in der Regel keinen direkten Zugriff auf die QoS-Parameter des Mobilfunknetzes haben. Zugleich eröffnet es neue Geschäftsmodelle für Mobilfunkbetreiber.

Besonders vorteilhaft ist es, wenn die Adaption des zu übertragenden Datenvolumens unter Berücksichtigung der anwendungsbedingten maximalen Übertragungszeit erfolgt. Die maximale Übertragungszeit ergibt sich beispielsweise aus den unterschiedlichen Echtzeitanforderungen der laufenden Anwendungsteile. Die Einhaltung der maximalen Übertragungsdauer ist regelmäßig für den ordnungsgemäßen Ablauf der Anwendung zwingend vorauszusetzen. Beispielsweise wird die maximale Übertragungsdauer als maximale Zeitspanne definiert, bis zu deren Ablauf serverseitige Feedbackinformationen zu den von dem lokalen Anwendungsteil an den Server übertragenen Daten in dem lokalen Anwendungsteil zur Verfügung stehen müssen.

Die entscheidende Messgröße für die Regelung des zu übertragenden Datenvolumens ist daher nicht der Datendurchsatz, sondern die für die Übertragung erforderliche Dauer. Der Grad der Datenreduzierung bzw. Datenmaximierung soll abhängig von der gemessenen Übertragungsdauer und/oder vom örtlich und zeitlich zur Verfügung stehenden Mobilfunkstandard erfolgen. Grundsätzlich gilt jedoch, dass der Grad der Datenreduzierung bzw. -maximierung autonom von der Anwendung selbst bestimmt wird. Die Netzelemente des Mobilfunksystems treten nur passiv als Datenübertragungsmedium in Erscheinung, ein aktives Eingreifen in die Entscheidung zur Adaption des Datenvolumens soll erfindungsgemäß durch die Anwendung bzw. Anwendungsteile erfolgen.

Weiterhin kann vorteilhafterweise vorgesehen sein, dass die tatsächliche Übertragungszeit während der Datenübertragung bestimmt, insbesondere berechnet wird. Die tatsächlich benötigte Übertragungszeit wird auf Einhaltung der anwendungsbedingten maximalen Übertragungszeit überprüft.

Bevorzugt ergibt sich die tatsächliche Übertragungszeit aus der Summe den benötigten Übertragungszeiten in Up- und Downlinkrichtung zwischen den beiden Anwendungsteilen sowie der Verarbeitungszeit im zentralen Server bzw. im lokalen Endgerät. Besonders bevorzugt entspricht die tatsächliche Übertragungszeit der Summe aus der benötigten Übertragungszeit in Uplinkrichtung, der Verarbeitungszeit im zentralen Server sowie der Übertragungszeit in Downlinkrichtung vom Server zum lokalen Anwendungsteil.

Die beschriebenen Merkmale und Verfahrensschritte werden der Einfachheit halber im Folgenden auf den Uplink, d. h. der Datenübertragung von dem lokalen Endgerät zum zentralen Server fokussiert. Prinzipiell sind die beschriebenen Merkmale bzw. Verfahrensschritte ohne Weiteres für die Downlinkrichtung, d. h. für die Datenübertragung vom zentralen Server zu wenigstens einem lokalen mobilen Endgerät anwendbar.

Die tatsächliche Übertragungsdauer in Uplinkrichtung wird vorzugsweise durch den zentralen Server berechnet. Die Berechnung entspricht einer Differenzbildung zwischen Anfangszeitpunkt der endgeräteseitigen Übertragung und dem serverseitigen Empfangsquittierungszeitpunkt. Idealerweise wird dem auf dem zentralen Server laufenden Anwendungsteil der Anfangszeitpunkt der Übertragung von dem lokalen Gerät zum zentralen Server per Zeitstempel mitgeteilt. Der Empfangsquittierungszeitpunkt entspricht vorzugsweise dem Zeitpunkt, zu dem sämtliche Daten bzw. Datenpakete einer zusammenhängenden Datenübertragung im zentralen Server empfangen und entsprechend quittiert werden. Eine Voraussetzung hierfür ist die Verwendung synchronisierter Uhren zwischen lokalem Gerät und zentralem Server bzw. die Verwendung der globalen Zeitinformation über GPS. Das Verschicken des Zeitstempels des Versendens der Daten durch den lokalen Anwendungsteil an den zentralen Anwendungsteil ist nicht zwingend erforderlich, wenn die reine Übertragungsdauer von dem lokalen Anwendungsteil zum zentralen Anwendungsteil im Vergleich zur Gesamtdauer gering ist.

Eine alternative Lösung zur Berechnung der Übertragungsdauer in einer Übertragungsrichtung basiert darauf, dass die Zeitdifferenz zwischen Erhalt des ersten Datenpakets und erfolgreichen Erhalts des letzten Datenpakets bestimmt wird. In diesem Fall ist es notwendig, dass der Übertragungsanfangszeitpunkt sowie - endzeitpunkt empfängerseitig erkennbar sind. Beispielsweise lassen sich Start- und/oder Endzeitpunkt anhand des Dateninhaltes erkennen. Insbesondere können bei den bevorzugten Anwendungen des Verfahrens trennbare Ereignisse zwischen den Anwendungsteilen übertragen werden. Eine Auswertung der Datenpakte im zentralen Anwendungsteil lässt folglich konkrete Rückschlüsse auf den Start- und/oder Endzeitpunkt zu.

Die Bestimmung der Übertragungszeit in Downlinkrichtung, d. h. von dem zentralen Anwendungsteil zu dem lokalen Anwendungsteil, erfolgt analog, wobei in diesem Fall die Berechnung ausschließlich im lokalen Anwendungsteil erfolgt.

Besonders vorteilhaft ist es, wenn der zentrale und bzw. oder der lokale Anwendungsteil den verwendeten Funkstandard und den damit verbundenen maximal möglichen Datendurchsatz kennt. Diese Information soll dem lokalen und/oder zentralen Anwendungsteil vor und/oder während der Datenübertragung zur Verfügung gestellt werden. Der lokale und/oder zentrale Anwendungsteil hat vorzugsweise Zugriff auf ein oder mehrere gespeicherte Tabellen, deren Inhalt die maximal mögliche Datenrate pro Funkstandard, insbesondere Mobilfunkstandard, beschreibt. Idealerweise enthalten ein oder mehrere Tabellen Informationen bezüglich der typischerweise bzw. durchschnittlich erzielbaren maximalen Durchsätze, vorzugsweise gesondert in Up- und Downlinkrichtung. Für die verschiedenen Mobilfunkstandards können die maximal erreichbaren Durchsätze in Up- und Downlinkrichtung hinterlegt sein, d. h. für LTE, HSPA, HSPA+, UMTS, EDGE bzw. GPRS. Diese Informationen werden vorteilhafterweise ortabhängig hinterlegt, um beispielsweise Konfigurationsunterschiede wie die Unterstützung von HSPA oder HSPA+ in verschiedenen Zellen oder unterschiedlich große Frequenzspektren bei LTE in der maximal erzielbaren Datenrate berücksichtigen zu können.

Aus der für die Anwendung einzuhaltenden maximalen Übertragungsdauer und den gespeicherten erreichbaren Datendurchsätzen für die jeweilige Netztechnologie soll vorzugsweise die maximal übertragbare Datenmenge berechnet werden.

Für die Datenratenadaption stehen idealerweise mindestens einem Anwendungsteil wenigstens zwei auswählbare Konfigurationen zur Verfügung, wobei jede Konfiguration für wenigstens eine gezielte Maßnahme zur Reduzierung bzw. Maximierung der zu versendenden Datenvolumina steht. Denkbar ist es, dass in einer ersten Konfiguration unverarbeitete Rohinformationen zwischen den Anwendungsteilen übertragen werden. In diesem Fall erfolgt kein Pre-Processing der zu versendenden Daten innerhalb des sendenden Anwendungsteils. Gesammelte Informationen, beispielsweise Video- bzw. Bilddaten, werden ohne zusätzliche Komprimierung übermittelt.

Ferner ist es vorstellbar, dass wenigstens eine Konfiguration eine komprimierte Informationsübertragung vorsieht. Die zu versendenden Daten werden vorab unter Ausnutzung geeigneter Komprimierverfahren in Datenformate mit geringerer Datenmenge gewandelt, gegebenenfalls unter Inkaufnahme von Qualitätsverlusten. Durch Verringerung der Auflösung, Änderung der Farbtiefe, etc. kann eine Datenreduktion von Video- und Bilddaten erzielt werden.

Eine weitere Konfiguration kann die Übertragung von codierten Informationen zwischen den Anwendungsteilen umfassen. In diesem Fall wird von dem sendenden Anwendungsteil ein Pre-Processing ausgeführt. Durch eine erste Analyse und Auswertung des zu übertragenden Datenstroms in dem sendenden Anwendungsteil kann es ausreichend sein, lediglich codierte Informationen, die den Inhalt der zu sendenden Daten beschreiben, zu übertragen. Gegenüber der Rohdatenmenge ist eine vergleichsweise geringe Datenmenge zu übertragen.

Eine weitere Konfiguration sieht vor, ausschließlich Delta-Informationen zwischen den Anwendungsteilen zu übertragen. Beispielsweise besteht die Möglichkeit, lediglich Änderungen gegenüber einer bereits erfolgten Daten- bzw. Informationsübertragung zu versenden. Ebenso kann es zweckmäßig sein, dass der empfangende Anwendungsteil den sendenden Anwendungsteil vorab über bereits erhaltene Daten und Informationen in Kenntnis setzt. Der sendende Anwendungsteil entscheidet sodann, welche geänderten bzw. neuartigen Informationen für die Übertragung erforderlich sind. Diese Vorgehensweise ist besonders sinnvoll, wenn mehrere mobile Endgeräte ähnliche Daten an einen gemeinsamen zentralen Anwendungsteil versenden, die Endgeräte sich beispielsweise auf ähnlichen oder identischen Streckenabschnitten fortbewegen oder wenn die Uplinkrichtung eine gemäß dieser Erfindung berechnete geringe Datenmenge zulässt, die Downlinkrichtung dagegen eine deutlich größere Datenmenge zulässt.

Ferner kann jeweils eine Konfiguration für eine kontinuierliche Datenübertragung zwischen den Anwendungsteilen und eine weitere Konfiguration für eine diskontinuierliche Datenübertragung zwischen den Anwendungsteilen stehen. Ist eine Ratenreduzierung erforderlich, so eignet sich die Auswahl der Konfiguration mit diskontinuierlicher Datenübertragung, um die erforderliche maximale Übertragungszeit einhalten zu können.

Insbesondere eignet sich als diskontinuierliche Datenübertragung der Einsatz eines sogenannten Pollingverfahrens, in dem eine Datenübertragung durch eine Abfrage der sendenden Anwendungsteile durch den als Master fungierende empfangenden zentralen Anwendungsteil initiiert wird.

Eine wählbare Konfiguration kann eine Priorisierung der zu übertragenden Datenvolumina vornehmen. Insbesondere können so besonders zeitkritische Datenvolumina bevorzugt behandelt werden. Denkbar ist auch eine Kombination aus zwei oder mehreren Maßnahmen zu einer Konfiguration.

Aus der anwendungsbedingten maximalen Übertragungsdauer und der maximal möglichen Durchsatzrate, die sich aus den gespeicherten Informationen bezüglich der verwendeten Funkstandards bzw. Mobilfunkstandards bestimmt, soll ein initial maximal mögliches Datenvolumen während einer Zeitdauer bestimmt werden. Befindet sich die geplante zu übertragende Datenmenge in Einklang mit dem errechneten maximal möglichen Datenvolumen, so ist keine initiale Adaption des während der Zeitdauer zu übertragenden Datenvolumens notwendig. Übersteigt das geplante zu übertragende Datenvolumen das maximal mögliche Datenvolumen, so ist eine initiale Adaption des Datenvolumens notwendig, idealerweise durch Auswahl einer geeigneten Konfiguration. Es wird also noch vor Beginn der Datenübertragung eine passende Konfiguration ausgewählt, um der anwendungsbedingten maximalen Übertragungszeit Rechnung zu tragen.

Denkbar ist es, dass sich während der Übertragung die Bedingungen des verwendeten Funknetzes ändern und gegebenenfalls geringere oder auch höhere Durchsatzraten möglich sind. Zweckmäßig kann während der Datenübertragung eine dynamische Adaption ausgeführt werden, um eine Anpassung an die geänderten Funkbedingungen vornehmen zu können. Idealerweise erfolgt die dynamische Adaption während der Datenübertragung mittels Umschalten zwischen wenigstens zwei Konfigurationen mit unterschiedlichen zu übertragenden Datenmengen. Insbesondere kann bei einer Verbesserung der Übertragungsbedingungen des Funknetzes mit zunehmenden Durchsatzraten auf eine Konfiguration mit höherem Datenvolumen übergegangen werden, während bei einer Verschlechterung der Übertragungsbedingungen zu einer Konfiguration mit geringerem Datenvolumen zu schalten ist. In diesem Fall kann trotz der nachlassenden Durchsatzraten die Einhaltung der anwendungsbedingten maximalen Übertragungszeit gewährleistet werden.

Eine Möglichkeit zur dynamischen Ratenadaption besteht darin, den Umschaltvorgang zwischen wenigstens zwei Konfigurationen auf Grundlage eines schwellwertgesteuerten Algorithmus auszuführen. Insbesondere soll hier die Differenz zwischen anwendungsbedingter maximaler Übertragungsdauer und tatsächlicher Übertragungsdauer gegen einen Schwellwert verglichen werden oder die tatsächliche Übertragungsdauer als absoluter Wert mit einem absoluten Schwellwert verglichen werden.

Um ein instabiles Verhalten aufgrund häufiger Konfigurationswechsel zu vermeiden, bietet sich ein Schwellwert gesteuerter Algorithmus mit Hysterese an, so dass die Umschaltung zwischen zwei Konfigurationen richtungsabhängig an unterschiedliche Schwellwerte geknüpft ist. Bevorzugt wird der Umschaltvorgang zu Konfigurationen mit vergrößertem Datenvolumen mit härteren Schwellwerten bedingt.

Denkbar ist es, dass eine Umschaltung nur zwischen benachbarten Konfigurationen möglich ist. Alternativ besteht die Möglichkeit, ein oder mehrere Konfigurationen zu überspringen, falls die Bedingungen bzw. Schwellwerte der übernächsten Konfigurationen ebenfalls unterschritten bzw. übertroffen werden.

Alternativ oder zusätzlich bietet sich die Möglichkeit an, den Umschaltvorgang ereignisgetriggert auszuführen. Insbesondere können externe Ereignisse, die weder die Übertragung der Datenmengen bzw. die Bedingungen des Funknetzes betreffen, zu einem Konfigurationsumschaltprozess beitragen. Denkbar ist es beispielsweise, dass aufgrund der Mobilitätsänderung des mobilen Endgerätes eine kürzere Übertragungszeit notwendig wird oder diese im Gegenteil toleranter festgesetzt werden kann.

Bestimmt ein Anwendungsteil, dass die notwendigen Voraussetzungen für eine Umschaltung der Konfiguration erfüllt sind, so muss die Umschaltabsicht dem zugeordneten empfangenden Anwendungsteil mitgeteilt werden. Denkbar ist es, dass wenigstens ein Anwendungsteil dem anderen Anwendungsteil ein Umschalten einer Konfiguration vorschlagen oder alternativ vorgeben kann. Der Unterschied zwischen Vorschlagen und Vorgeben besteht darin, dass im ersten Fall der adressierte Anwendungsteil selbst entscheiden und den Umschaltprozess gegebenenfalls verwerfen kann und im zweiten Fall eine Umschaltung der Konfiguration zwingend erforderlich ist.

Für den Fall, dass die definierten und ausgewählten Konfigurationen die an die Übertragung gestellten Voraussetzungen nicht erfüllen, kann zweckmäßig auf die bereitgestellten QoS-Parameter des Funknetzes, insbesondere des Mobilfunknetzes, Einfluss genommen werden. Es besteht also die Möglichkeit, zusätzlich zu der anwendungsgetriggerten Datenadaption bestimmte QoS-Parameter des verwendeten Funknetzes anzufordern, um die Datenübertragung an die Bedürfnisse der Anwendung anzupassen.

Das Verfahren ist für alle Arten der M2M-Kommunikation anwendbar, für die eine hohe Menge an Daten mit bestimmten Zeitanforderungen übertragen werden und für die eine Übertragung der vollen Datenmenge zu Verletzungen dieser Anforderungen führen könnte. Ein mögliches Einsatzgebiet betrifft beispielsweise die Verkehrstelematik. Weitere Beispiele sind Nachrichtenverteiler (LKW), Flottenmanagement, Gebäudeautomatisierung, Fernwirken, Gesundheitstelematik, Telemedizin, Taxiinformationen und Telemetrie.

Das Verfahren ist zudem in der M2P-Kommunikation einsetzbar, deren übliche zu übermittelnde Datenmenge in bestimmten Situationen zu groß für eine Übertragung über das verwendete Kommunikationsnetz sein kann. Anwendungsfälle sind beispielsweise die Videoübertragung einer Autoeinfahrt, bei der die Echtzeitanforderungen (Antreffen eines Autos) wichtiger sind als Bildqualität (z. B. Auflösung, Farbtiefe). Weitere Beispiele sind auf dem Verbrauchermarkt die Übertragung von YouTube-Videos, bei denen eine initiale lange Phase für das Laden der Daten in den Puffer sowie Unterbrechungen während des Abspielens des Videos zum Füllen des Datenpuffers des lokalen Anwendungsteils, das sogenannte Rebuffering, vermieden werden können.

Um bei der heutigen Übertragung von YouTube-Videos eine zufriedenstellende Qualität zu erzielen, sind die heute über GSM-, EDGE- und UMTS-Netze bereitgestellten Datenraten von bis zu 384 kbit/s nicht ausreichend. Erfindungsgemäß kann hier durch den lokalen Anwendungsteil in automatisierter Form eine geringere Videoauflösung vom Server angefordert werden, sobald der Pufferinhalt in dem lokalen Anwendungsteil einen als Schwellwert definierten Stand unterschreitet.

Das Verfahren ist nicht nur für die Übertragung von M2M bzw. M2P-Daten in Mobilfunknetzen des 3GPP-Standards (GSM, UMTS, LTE) geeignet, sondern ist auch für die Übertragung in Bluetooth, Radio Frequency Identification (RFID) und Wireless Local Area Network (WLAN-Netzen) sowie im Satellitenfunk oder Datenfunk anwendbar. Anwendungen im Festnetz sind ebenso möglich.

Die Erfindung betrifft des Weiteren ein Kommunikationssystem mit wenigstens einem auf wenigstens einem mobilen Gerät lokal ausgeführten Anwendungsteil und einem auf wenigstens einem zentralen Server ausgeführten Anwendungsteil. Erfindungsgemäß erfolgt die Datenübertragung zwischen den Anwendungsteilen gemäß dem erfindungsgemäßen Verfahren bzw. einer vorteilhaften Ausführung des erfindungsgemäßen Verfahrens. Die Vorteile und Eigenschaften des Kommunikationssystems entsprechen offensichtlich denen des Verfahrens, weshalb an dieser Stelle auf eine wiederholende Beschreibung verzichtet wird.

Das Kommunikationssystem eignet sich insbesondere zur Maschine-zu-Maschine (M2M) bzw. Maschine-zu-Mensch-Kommunikation (M2P).

Weiterhin vorteilhaft ist es, wenn wenigstens ein mobiles Endgerät wenigstens einen Sensor und bzw. oder eine Kamera aufweist. Die erfassten Sensor- bzw. Kameradaten sollen dem zentralen Anwendungsteil auf dem Server für die Auswertung zur Verfügung gestellt werden. In diesem Fall werden die erfassten Sensor- bzw. Kameradaten mittels des erfindungsgemäßen Verfahrens übertragen. Denkbar ist es ebenfalls, dass das mobile Endgerät mittelbar oder unmittelbar mit wenigstens einer Sensorik bzw. wenigstens einer Kamera verbunden bzw. verbindbar ist. Das Ergebnis der Auswertung kann von dem Server an das lokale Endgerät übertragen werden.

Die Erfindung betrifft zudem eine auf einem Datenträger gespeicherte Anwendung bzw. Anwendungsteil zur Durchführung des erfindungsgemäßen Verfahrens bzw. einer vorteilhaften Ausgestaltung des Verfahrens. Die vorgestellten Vorteile und Eigenschaften des Verfahrens treffen offensichtlich auch auf die auf einem Datenträger gespeicherte Anwendung bzw. Anwendungsteil zu, weshalb an dieser Stelle keine wiederholende Beschreibung erfolgt.

Weitere Vorteile und Eigenschaften des erfindungsgemäßen Verfahrens bzw. des Kommunikationssystems sollen im Folgenden anhand von mehreren Zeichnungen näher beschrieben werden. Es zeigen:

Figur 1:    eine schematische Darstellung des erfindungsgemäßen Kommunikationssystems zur Maschine-zu-Maschine-Kommunikation (M2M),

Figur 2:    eine Darstellung des Kommunikationssystems aus Figur 1 mit dem eingezeichneten Datenpfad zwischen lokaler und zentraler Anwendung,

Figur 3:    ein Ablaufdiagramm für die anwendungsgetriebene Adaption des zu übertragenden Datenvolumens,

Figur 4:    ein vereinfachtes Ablaufdiagramm zur automatisierten Adaption des Datenvolumens und

Figur 5:    eine schematische Darstellung der Definition von einzelnen Konfigurationen unterschiedlichen Datenvolumens,

Figur 6:    eine Diagrammdarstellung zur Verdeutlichung des Umschaltalgorithmus zwischen einzelnen Konfigurationen,

Figur 7:    ein Nachrichtendiagramm zur Darstellung der Signalisierung zwischen zentraler und lokaler Anwendung für den Konfigurationswechsel.

Die Erfindung schlägt ein Verfahren vor, das die bei der M2M-Kommunikation zu übertragende Datenmenge dynamisch an die verfügbaren Übertragungskapazitäten anpasst. Dabei soll der Grad der Datenreduzierung abhängig vom örtlich und zeitlich zur Verfügung stehenden Mobilfunkstandard und der gemessenen Übertragungsdauer erfolgen und autonom durch die Anwendung selbst bestimmt werden. Die Netzelemente des Mobilfunksystems treten nur passiv als Datenübertragungsmedium in Erscheinung, ein aktives Eingreifen in die Entscheidung zur Adaption des Datenvolumens soll erfindungsgemäß allein durch die Anwendung erfolgen.

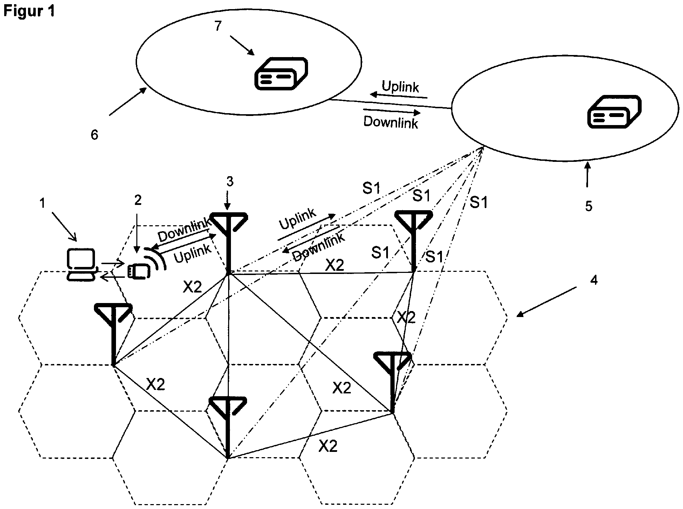

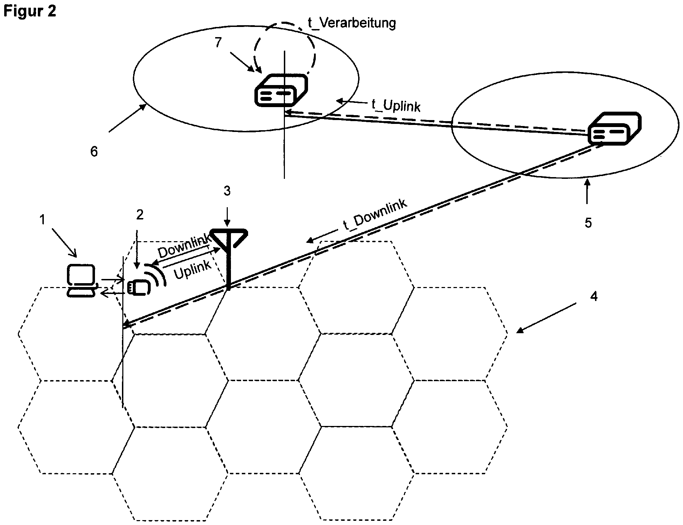

Die Figuren 1 und 2 zeigen eine M2M-Kommunikation über ein zellulares LTE-Netz. Auf der Maschine 1 wird ein lokaler Softwareanwendungsteil mittels eines Prozessors ausgeführt. Die Maschine 1 besitzt eine Sensorik oder wenigstens eine Kamera oder steht mit dieser bzw. diesen mittelbar oder unmittelbar in Verbindung. Die erfassten Sensor- bzw. Kameradaten sollen an den Server 7 bzw. an den dort ausgeführten zentralen Anwendungsteil zur weitergehenden Auswertung weiterleitet werden. Die ausgewerteten Informationen sollen sodann vom Server 7 wieder zurück an die Maschine 1 bzw. den lokalen Anwendungsteil zur lokalen Bearbeitung geleitet werden. Insbesondere kann das System aus mehreren mobilen Maschinen 1 bestehen, wobei die ausgewerteten Daten einer Maschine 1 mittels des Servers 7 an alle oder einen Teil der übrigen Maschinen 1 weitergeleitet werden.

Für die Datenübertragung steht jeder Maschine 1 eine Mobilstation 2 zur Verfügung, die an das Mobilfunknetz angebunden ist. Die Mobilstation ist entweder direkt in die Maschine 1 integriert oder mittelbar oder unmittelbar mit dieser verbunden. Genauso gut kann der lokale Anwendungsteil selbst auf der Hardware der Mobilstation 2 ausgeführt werden. Die Verbindung zwischen Maschine 1 und Mobilteil 2 kann drahtgebunden oder per Funk, insbesondere Bluetooth, aufgebaut sein.

Der ausführende Prozessor kann entweder Bestandteil der Mobilstation 2 selbst sein oder alternativ Bestandteil der Maschine 1 sein, die mittelbar oder unmittelbar mit der Mobilstation 2 verbunden bzw. verbindbar ist.

Der lokale Anwendungsteil steuert die Übertragung sensor- und kameraerfasster Daten von der Mobilstation 2 über das LTE-Mobilfunksystem, bestehend aus einer Basisstation 3 (eNodeB), dem evolved UMTS Mobile Terrestrial Radio Access Network 4 (eUTRAN) und dem evolved Packet Core 5 (ePC), zu einem sich im Backend-System 6 befindlichen Server 7, auf dem der zentrale Anwendungsteil läuft. Die Gesamtanwendung zur Ausführung des Verfahrens setzt sich aus dem lokalen und zentralen Anwendungsteil zusammen.

Der lokale und zentrale Anwendungsteil tauschen Informationen aus, bestehend aus den Nutzdaten sowie Zeitstempeln des Versendens der Daten. Zudem sind die Anwendungsteile aufeinander abgestimmt, so dass spezielle Aufgaben von dem lokalen Anwendungsteil und andere Aufgaben von dem zentralen Anwendungsteil als Master übernommen werden. Für das ordnungsgemäße Zusammenspiel der Anwendungsteile ist die tatsächliche Gesamtübertragungsdauer maßgeblich.

Die Gesamtübertragungsdauer, wie in Figur 2 gekennzeichnet, berechnet sich aus der Summe aus der Übertragungsdauer t_Uplink der Daten in Uplink-Richtung von der Mobilstation 2 über das Mobilfunknetz 3, 4, 5 zum Server 7, der notwendigen Verarbeitungszeit t_Verarbeitung des Servers 7 zur Auswertung der Daten und der Übertragungsdauer t_Downlink der ausgewerteten Informationen in Downlink-Richtung aus dem Backend-System 6 zur Mobilstation 2 und dem dortigen lokalen Anwendungsteil.

Zur Bestimmung der Übertragungsdauer t_Uplink in Uplink-Richtung soll dem zentralen Anwendungsteil des Servers 7 der Zeitpunkt des Versendens der Daten im Mobilgerät 2 mitgeteilt werden. Dazu soll der lokale Anwendungsteil den Anfangszeitpunkt der Datenübertragung an den zentralen Anwendungsteil übermitteln, die sodann aus der Differenz des Zeitpunktes der Bestätigung des erfolgreichen Erhalts des letzten Datenpaketes am Server 7 (Acknowledgment) und des Anfangszeitpunkts die Übertragungsdauer t_Uplink berechnet. Dieser Wert, sowie die durch den Server 7 berechnete Verarbeitungsdauer t_Verarbeitung der Daten sollen in Downlink-Richtung zur Mobilstation 2 übertragen werden und dem lokalen Anwendungsteil zur Verfügung gestellt werden. Zusätzlich soll die Downlink-Übertragungsdauer t_Downlink durch den lokalen Anwendungsteil berechnet werden, vorzugsweise indem der Server 7 dem zentralen Anwendungsteil den Startzeitpunkt der Datenübertragung an den lokale Anwendungsteil sendet und der lokale Anwendungsteil als Endzeitpunkt der Übertragung den Erhalt der Bestätigung der erfolgreichen Datenübertragung (Acknowledgment) verwendet und über Differenzbildung die Übertragungsdauer t_Downlink berechnet. Die Aufteilung der Gesamtübertragungsdauer ist notwendig, um Entscheidungen für eine Adaptation des Datenvolumens in Anhängigkeit der Übertragungsdauer innerhalb der verschiedenen Richtungen (Uplink/Downlink) treffen zu können.

Die Bezeichnungen Datenmenge und Datenvolumen bedeuten hierbei die Menge an Daten, die transferiert wird, um anschließend am Server 7 ausgewertet zu werden, beispielsweise die über einen Video-Stream übermittelten Daten zur Erkennung eines Objektes in der Umgebung der Maschine bzw. der Mobilstation 2. Hierzu zählen auch Wiederholungen nicht korrekt empfangener Daten. Die Gesamtmenge an Daten wird für die Übertragung im Mobilfunknetz 3, 4, 5 typischerweise in kleinere Pakete unterteilt, die einzeln übertragen und deren korrekter Empfang bestätigt wird (Acknowledgment).

Unter Umständen kann es erforderlich sein, dass die Datenübertragungszeit zwischen der Maschine, d.h. dem lokalen Anwendungsteil, und der Mobilstation 2 in die Berechnung der Übertragungszeiten t_Uplink und t_Downlink miteinfliessen muss, falls diese gegenüber der Übertragungsdauer von der Mobilstation 2 zum Server 7 nicht vernachlässigbar klein ist.

Es kann zweckmäßig sein, dass zusätzlich zu den kamera- und sensorerfassten Daten zusätzlich geographische Koordinaten zur Markierung der Positionen des lokalen Anwendungsteils bzw. der Mobilstation 2 mitgesendet werden. Diese Zusatzinformationen können beispielsweise für die Auswertung im Server 7 nützlich sein. Zudem kann basierend auf diesen Informationen eine Anpassung der zulässigen maximalen Gesamtübertragungsdauer notwendig sein. Die Zusatzinformationen werden über ein Global Positioning System (GPS) oder ähnliches System der Maschine bzw. des Mobilgerätes 2 ermittelt.

Die Mobilstation 2 als Sender der Daten in Uplink-Richtung und Empfänger in Downlink-Richtung hat Kenntnis über den momentan verwendeten Mobilfunkstandard zwischen der Mobilstation 2 und dem Knoten 3. Diese Information soll dem lokalen Anwendungsteil zur Verfügung gestellt werden. Der lokale Anwendungsteil soll anhand von gespeicherten Tabellen Kenntnis über die maximale Datenrate für verschiedene Mobilfunkstandards erlangen. Dabei sollen die typischerweise erreichten maximalen Durchsätze hinterlegt sein, z.B. 75 Mbit/s in Downlink-Richtung und 30 Mbit/s in Uplink-Richtung für die erste Ausbaustufe von LTE, 20 Mbit/s in Downlink-Richtung und 10 Mbit/s in Uplink-Richtung für HSPA inkl. der ersten Ausbaustufe für HSPA+, 360 kbit/s in Downlink- und Uplink-Richtung für UMTS Release 99, 220 kbit/s in Downlink-Richtung und 110 kbit/s in Uplink-Richtung für EDGE (für Mobilstationen, die vier Zeitschlitze in Downlink- und zwei Zeitschlitze in Uplink-Richtung unterstützen), sowie 70 kbit/s in Downlink-Richtung und 35 kbit/s in Uplink-Richtung für den General Packet Radio Service (GPRS), wiederum für Mobilstationen, die vier Zeitschlitze in Downlink- und zwei Zeitschlitze in Uplink-Richtung unterstützen.

Der lokale Anwendungsteil soll über Änderungen des verwendeten Mobilfunkstandards informiert werden. Eine Aktualisierung soll sowohl während aktiver Datenübertragungen, als auch während Übertragungspausen (Mobilstation 2 campiert auf der Zelle) erfolgen. Dies ist erforderlich, da mobile Teilnehmer den Versorgungsbereich eines bestimmten Mobilfunkstandards verlassen bzw. wieder betreten können, die Verfügbarkeit eines bestimmten Mobilfunkstandards temporär unterbrochen sein kann, z.B. durch Ausfälle und die Zellgrenzen sich auch für stationäre Teilnehmer ändern können, z.B. durch Cell-Breathing speziell bei UMTS.

Aus der für die Anwendung einzuhaltenden maximalen Übertragungsdauer und den gespeicherten erreichbaren Durchsätzen für die jeweilige Netztechnologie soll die maximal zu übertragende Datenmenge berechnet werden.

Die geplante zu übertragende Datenmenge ist dem lokalen Anwendungsteil bekannt, z.B. die Menge der über Sensoren erfassten Daten oder die Menge an Video-Daten, die innerhalb einer bestimmten Zeitdauer für deren Auswertung am zentralen Server 7 übertragen werden. Ist die zu übertragende Datenmenge geringer oder gleich der berechneten maximalen Datenmenge, so soll die Datenübertragung ohne Reduktion erfolgen.

Übersteigt die Datenmenge das berechnete maximale Datenvolumen, so birgt dies die Gefahr, dass die erforderliche maximale Übertragungsdauer überschritten wird. Vorsorglich werden erfindungsgemäß die geplanten zu übertragenden Daten über einzelne oder eine Kombination der folgenden Maßnahmen reduziert. Diese Maßnahmen fokussieren sich auf eine Reduzierung der Datenmenge in Uplink-Richtung, da diese in der Regel die limitierende Richtung darstellt.

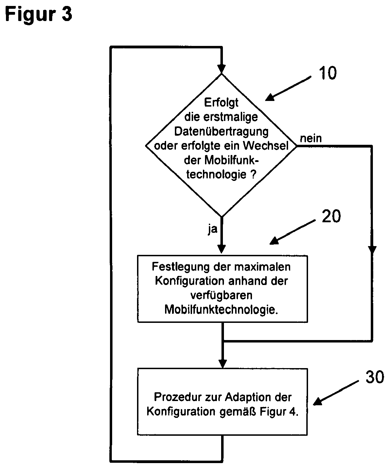

Figur 3 zeigt den kontinuierlichen Prozess der durch die Anwendung initiierten Adaption des Datenvolumens. Im Block 10 wird überprüft, ob eine erstmalige Datenübertragung beabsichtigt oder ob zwischenzeitlich ein Wechsel der Mobilfunktechnologie ergangen ist. Bei der ersten Datenübertragung und im Falle eines Wechsels der Mobilfunktechnologie, z.B. nach Verlassen des Versorgungsbereichs einer ersten Mobilfunktechnologie und Einbuchen in das Netz einer zweiten Mobilfunktechnologie, erfolgt im Block 20 die Festlegung der maximal zu übertragenden Datenmenge durch Auswahl einer geeigneten Konfiguration. Auf diese soll in einem späteren Beschreibungsabschnitt näher eingegangen werden.

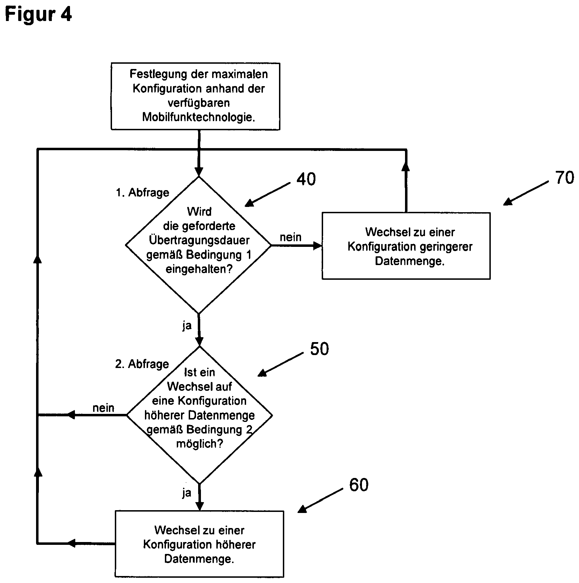

Während der Durchführung einer Datenübertragung erfolgt im Block 30 die Prozedur zur Adaption der Konfiguration, bei der gemäß Figur 4 kontinuierlich überprüft wird, ob die geforderte Übertragungsdauer eingehalten (Block 40) oder ein Wechsel auf eine andere Konfiguration zur Übertragung eines geringeren Datenvolumens erfolgen muss bzw. ein Wechsel auf eine andere Konfiguration zur Übertragung eines höheren Datenvolumens erfolgen kann (Block 50). Der eigentliche Konfigurationswechsel zu einer höheren Datenmenge bzw. geringeren Datenmenge wird sodann in den Blöcken 60, 70 ausgelöst und die Prozedur zur Überprüfung der Datenrate beginnt erneut.

Im nachfolgenden Teil soll auf einzelne Maßnahmen zur Reduktion der Datenmenge eingegangen werden.

Es besteht die Möglichkeit, dass zur Identifizierung von Objekten in der Maschinenumgebung anhand der erfassten Kameradaten nicht der gesamte Video-Stream an den Server 7 übertragen wird, sondern vor der Übertragung über das Mobilfunknetz ein Pre-Processing in dem lokalen Anwendungsteil durchgeführt wird. Das erfasste Objekt wird durch einen Vergleich mit bekannten Objekten bereits durch den lokalen Anwendungsteil identifiziert und dessen Entfernung, z.B. mittels zweier örtlich versetzter Kameras, zur Kamera bzw. der Maschine abgeschätzt. Die Information, über welches Objekt es sich handelt, soll codiert an den Server 7 übertragen werden. Das Datenvolumen kann durch diese Maßnahme auf wenige Bytes reduziert werden. Zusätzlich soll die abgeschätzte geographische Position des Objektes übertragen werden. Gleiches gilt für die Erkennung von Ereignissen bzw. Zuständen durch Auswertung der Videodaten. Auch hier kann eine Vorabanalyse durch den lokalen Anwendungsteil ausgeführt werden und dem Server 7 lediglich eine codierte Information über das Auswerteergebnis zur Verfügung gestellt werden.

Wird im Backend-System 6, d.h. im Server 7, erkannt, dass das Objekt bereits bekannt ist und dort ebenso die exakte Position hinterlegt ist, soll über Punkt-zu-Punkt Information einzelnen, oder über Punkt-zu-Multipunkt-Information (Broadcast-Information) einer Vielzahl von teilnehmenden Maschinen mit ausgeführten lokalen Anwendungsteilen mitgeteilt werden, dass momentan in diesem geographischen Bereich keine Video-Streams von der jeweiligen Kamera geschickt werden sollen. Damit werden nur von Zeit zu Zeit Informationen über Objekte transferiert.

Genauso kann in dem lokalen Anwendungsteil vor der Datenübermittlung die Farbtiefe, Auflösung der Bilder und/oder die Anzahl der Übertragungen pro Zeiteinheit reduziert werden.

Eine weitere Maßnahme zur Reduzierung des zu übertragenden Datenvolumens ist eine über den zentralen Anwendungsteil initiierte Aufforderung, dass nur ein Teil der teilnehmenden Maschinen bzw. lokalen Anwendungen auf einer zurückgelegten Strecke einen Video-Stream übertragen sollen. Über eine Steuerung soll geregelt werden, in welchen zeitlichen und örtlichen Abständen Video-Streams an den zentralen Anwendungsteil übertragen werden sollen, z.B. durch Auffordern einzelner Mobilgeräte 2 durch den zentralen Anwendungsteil. Andere Mobilgeräte 2 sollen in den Discontinuous Transmission (DTX) Modus übergehen.

Über die Anwendungen können zudem die Kategorien der zu übertragenden Daten und Informationen anhand ihrer Wichtigkeit geordnet werden. Für die Reduzierung des Uplink-Datenvolumens sollen im äußersten Fall von Maschinen nur konkrete erfasste Objekte, Zustände bzw. Ereignisse übertragen werden, z.B. solche die unmittelbar zu einer potentiellen Gefahrensituation wenigstens einer der Maschinen führen könnten bzw. würden. Es sollen aber keine Video-Streams übertragen werden.

Wenn die Übertragungsdauer in Downlink-Richtung hinreichend kurz ist, in Uplink-Richtung aber nicht die gewünschte Zeit eingehalten werden kann, soll der zentrale Server 7 den ihm bekannten Soll-Zustand an erkannten Objekten, Zuständen bzw. Ereignissen übertragen und der lokale Anwendungsteil soll in Uplink-Richtung nur die identifizierten Differenzen des Ist-Zustandes zum Soll-Zustand übertragen.

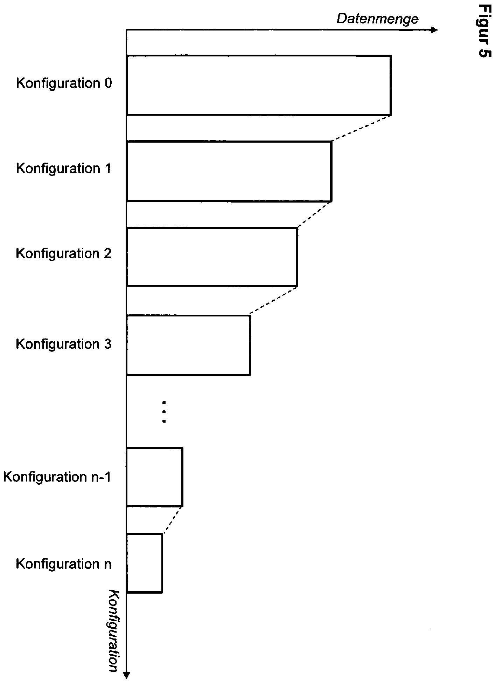

Erfindungsgemäß sollen die oben beschriebenen Maßnahmen in unterschiedlichen Kombinationen zu Konfigurationen zusammengefasst werden. Ein Beispiel für die Definition unterschiedlicher Konfigurationen mit verschiedenen Datenvolumina ist in Figur 5 dargestellt. Darin beinhaltet Konfiguration 0 die Übertragung der vollen Datenmenge, d.h. für die Übertragung kameraerfasster Daten den vollen Datenstrom. In Konfiguration 1 wird die Farbtiefe herausgenommen, in Konfiguration 2 zudem die Auflösung reduziert. Konfiguration n-1 beinhaltet die Übertragung codierter Informationen über erfasste Objekte, Zustände bzw. Ereignisse anstelle des Video-Streams. Konfiguration n bedeutet, dass im Uplink nur Abweichungen von einem bekannten Muster übertragen werden.

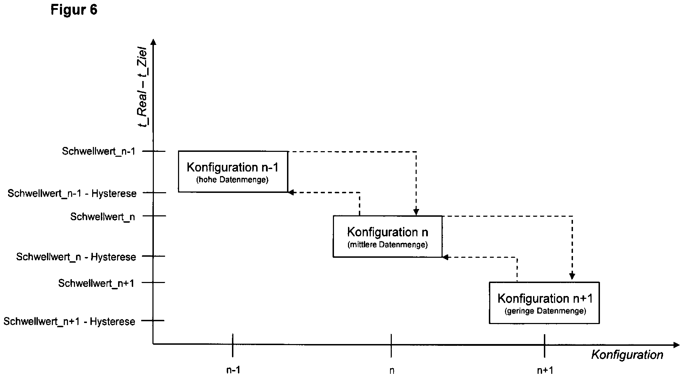

Für das Umschalten zwischen Konfigurationen wird ein schwellwertgesteuerter Algorithmus mit Hysterese verwendet. Diese Konfigurationsadaption ist in Figur 6 dargestellt. Dabei wird von Konfiguration n-1 auf Konfiguration n mit der nächst kleineren Datenmenge umgeschaltet, sobald die Differenz t_Real - t_Ziel den Schwellwert_n-1 überschreitet, d.h. die Gleichung

$$(t\_Real - t\_Ziel) > Schwellwert\_n\text{-}1 \quad (Bedingung\ 1)$$

ist erfüllt. Dieses Kriterium ist maßgebend für die Entscheidung in Block 40 des Ablaufdiagramms gemäß Figur 4. Wird der Schwellwert_n-1 auf 0 Sekunden gesetzt, so erfolgt gemäß Bedingung 1 die Umschaltung von Konfiguration n-1 auf Konfiguration n sobald die reale Zeit t_Real die Zieldauer t_Ziel überschreitet.

Ein Wechsel von n auf die Konfiguration der wiederum nächst kleineren Datenmenge n+1 soll erfolgen falls (t_Real - t_Ziel) > Schwellwert_n erfüllt ist. Die Schwellwerte_n-1, n, n+1 etc. sollen basierend auf der unterschiedlichen Größe der Datenvolumina der Konfigurationen festgelegt werden. Die Zieldauer t_Ziel ist dabei eine absolute Größe, gültig für alle Konfigurationen. Alternativ können unterschiedliche Zieldauern in Anhängigkeit von der Konfiguration definiert werden, z.B. t_Ziel_n-1 für Konfiguration n-1. In diesem Falle ließe sich die Anzahl der Schwellwerte (Schwellwert_n-1, Schwellwert_n, Schwellwert_n+1 etc.) auf einen einzigen Schwellwert reduzieren.

Ein Überspringen benachbarter Konfigurationen soll möglich sein, d.h. die Konfigurationsadaption soll nicht auf benachbarte Konfigurationen beschränkt sein.

Vorzugsweise sollen mehrere Messwerte (t_Real - t_Ziel) über einen Running-Average-Filter gemittelt und eine Adaption der Konfiguration anhand eines Vergleichs dieser gemittelten Messwerte mit den Schwellwerten durchgeführt werden.

Bei sich verbessernden Übertragungsbedingungen soll ein Zurückschalten von Konfiguration n auf die Konfiguration mit der nächst höheren Datenmenge (n-1) erfolgen, sobald

$$(t\_Real - t\_Ziel) < (Schwellwert\_n\text{-}1 - Hysterese) \quad (Bedingung\ 2)$$

erfüllt ist. Dieses Kriterium ist maßgebend für die Entscheidung in Block 50 der Figur 4.

Figur 6 zeigt die schwellwertgesteuerte Konfigurationsadaption, die anhand des folgenden Beispiels nochmals verdeutlicht werden soll: Für die Konfiguration n-1 betrage die Übertragungsdauer t_Real 5 Sekunden und liegt damit über der Zieldauer t_Ziel von 4 Sekunden. Damit ist t_Real - t_Ziel = 5s - 4s = 1s. Bei Setzen des Schwellwertes n-1 auf 0 wird gemäß Bedingung 1 der Wechsel auf die Konfiguration n initiiert. In der neuen Konfiguration n beträgt die Übertragungsdauer t_Real aufgrund der geringeren Datenmenge nur mehr 3 Sekunden. Wird für die Hysterese der Wert 2 Sekunden gewählt, so wird die aktuelle Konfiguration n beibehalten, da mit t_Real - t_Ziel = 3s - 4s = -1s und Schwellwert_n-1 - Hysterese = 0s - 2s = -2s die Bedingung 2 für einen Wechsel in die nächst höhere Konfiguration n-1 nicht erfüllt ist.

Bei sich verbessernden Übertragungsbedingungen und einer Übertragungsdauer von nunmehr 1s ist mit t_Real - t_Ziel = 1s - 4s = -3s die Bedingung 2 erfüllt und der Wechsel zurück zur Konfiguration n-1 wird ausgeführt.

Das Verschicken des Zeitstempels des Versendens der Daten durch den lokalen Anwendungsteil an den zentralen Anwendungsteil ist nicht erforderlich, wenn die reine Übertragungsdauer vom Endgerät 2 zum Server 7 im Vergleich zur Gesamtdauer gering ist. Größeren Einfluss auf die Gesamtdauer haben die Wartezeit, bis der eNodB-Scheduler Uplink-Ressourcen zugeteilt hat, und vor allem eine geringe Ressourcenzuteilung, die bei gegebener Datenmenge zu entsprechend langen Übertragungsdauern führen kann.

Eine alternative Lösung ist die Berechnung der Übertragungsdauer ausschließlich durch den Empfänger, d.h. die Zeitdifferenz zwischen Erhalt des ersten Pakets und erfolgreichem Erhalt des letzten Pakets. Anfangs- und Endzeitpunkt sind konkret definierbar, wenn es sich um trennbare Ereignisse handelt, z.B. bestimmte Objekte im Umfeld der Maschine. Das Erkennen einer Abweichung von einem bekannten Muster der Maschinenumgebung, also bei Eintritt eines Objektes in das Kamerabild, wird als Startzeitpunkt für die Übertragung der Video-Daten definiert und das Austreten des Objektes aus dem Kamerabild als Endzeitpunkt festgelegt.

Für kontinuierliche Video-Übertragungen ist eine durch Ereignisse ausgelöste Entscheidung für die Reduzierung des Datenvolumens besser geeignet. Ein Beispiel hierfür ist die Definition einer Mindestzeit, die dem Maschinenbediener für eine mögliche Reaktion auf die Signalisierung eines Objektes/Zustands/Ereignisses mindestens gegeben werden muss. Kommt diese Signalisierung beispielsweise zu spät und dem Bediener bzw. der Maschine verbleibt keine ausreichende Reaktionszeit, so soll der lokale Anwendungsteil ein Konfigurationswechsel anstoßen um durch die beschleunigte Datenübertragung die Signalisierungsdauer verkürzen zu können.

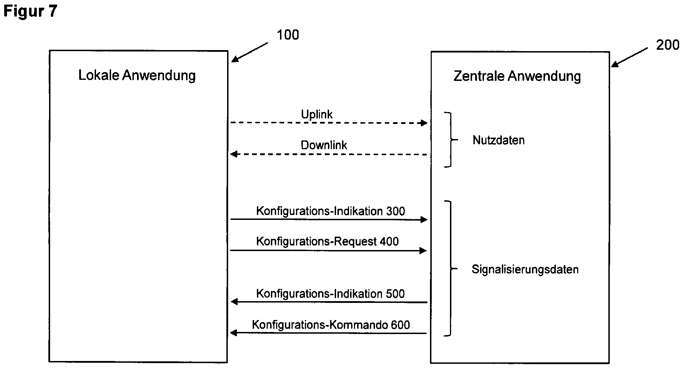

Die beschriebenen Maßnahmen waren auf den Uplink als limitierende Richtung fokussiert, sind prinzipiell aber auch für die Downlink-Richtung anwendbar. Wenn gemäß Bedingung 1 die Differenz zwischen gemessener Übertragungsdauer und Zielwert einen Schwellwert überschreitet, soll ein Wechsel auf eine Konfiguration geringeren Datenvolumens ausgewählt werden. Der zentrale Anwendungsteil fordert hierzu den lokalen Anwendungsteil auf, die im Uplink zu sendende Datenmenge durch einen Wechsel auf eine andere Konfiguration zu reduzieren. Der zentrale Anwendungsteil 200 soll hierzu, wie in Figur 7 dargestellt, ein Konfigurations-Kommando 600 an den lokalen Anwendungsteil 100 schicken.

Der lokale Anwendungsteil 100 kann auch selbst die Entscheidung treffen, die im Uplink zu sendende Datenmenge zu reduzieren. Dies soll vorzugsweise dann erfolgen, wenn die Gesamtübertragungsdauer t_Uplink + t_Verarbeitung + t_Downlink einen Schwellwert überschreitet. Der lokale Anwendungsteil 100 soll hierfür über die Konfigurations-Indikation 300 dem zentralen Anwendungsteil 200 mitteilen, dass eine andere Konfiguration im Uplink verwendet wird.

Eine Reduktion des Datenvolumens in Uplink-Richtung soll ebenfalls erfolgen, falls die Übertragungsdauer in Downlink-Richtung (t_Downlink) einen weiteren Schwellwert überschreitet oder die Verarbeitungsdauer (t_Verarbeitung) der Daten im zentralen Server 7 einen Schwellwert überschreitet. Damit wird eine Verkürzung der Gesamtübertragungsdauer durch eine Reduzierung der Uplink-Übertragungsdauer erzielt. Eine Verknüpfung der Bedingungen über UND-bzw. ODER-Schaltungen ist möglich, so dass die Entscheidung zur Datenreduktion wahlweise bei Verletzen eines Kriteriums oder zusätzlicher Kriterien erfolgt. Überschreitet beispielsweise die Verarbeitungszeit einen Schwellwert, so soll der zentrale Anwendungsteil ein Konfigurations-Kommando 600 an den lokalen Anwendungsteil senden, die wiederum den Wechsel der Konfiguration durch die Konfigurations-Indikation 300 bestätigt.

Berechnet der lokale Anwendungsteil 100 ein Überschreiten der Downlinkübertragungsdauer, so kann sie über einen Konfigurations-Request 400 den zentralen Anwendungsteil auffordern, für die Übertragung der Downlinkdaten auf eine andere Konfiguration zu wechseln. Analog soll bei Unterschreiten eines Schwellwertes ein Wechsel auf eine Konfiguration höheren Datenvolumens über einen Konfigurations-Request 400 angefordert werden können.

Über eine Konfigurations-Indikation 300 bzw. 500 teilt die sendende Instanz der empfangenden Instanz mit, welche Konfiguration aktuell verwendet wird. Für Uplink- und Downlink-Richtung können unterschiedliche Konfigurationen verwendet werden.

Über das Konfigurations-Kommando 600 fordert der zentrale Anwendungsteil 200 über Downlink-Signalisierung den lokalen Anwendungsteil 100 auf, einen Konfigurationswechsel für die Übertragung der Uplink-Daten durchzuführen.

Über einen Konfigurations-Request 400 fordert der lokale Anwendungsteil 100 über Uplink-Signalisierung den zentralen Anwendungsteil 200 auf, einen Konfigurationswechsel für die Übertragung der Downlink-Daten vorzunehmen.

Diese Signalisierungsdaten sollen vorzugsweise die kodierte Konfigurationsnummer enthalten, d.h. eine Konfigurations-Indikation "n" signalisiert dem Empfänger, dass vom Sender aktuell die Konfiguration n für die Übertragung der Nutzdaten verwendet wird. Analog sollen Konfigurations-Kommandos 600 und Konfigurations-Requests 400 die geforderte Konfigurationsnummer n über Signalisierung austauschen.

Der lokale Anwendungsteil 100 soll Konfigurations-Kommandos 600 befolgen, während sich der zentrale Anwendungsteil über Konfigurations-Requests 400 hinwegsetzen kann, da in dieser Instanz die Entscheidungshoheit gelagert ist.

Signalisierungsdaten für die Konfigurations-Indikationen 300 in Uplink- und 500 in Downlink-Richtung, Konfigurations-Requests 400 in Uplink-Richtung und Konfigurations-Kommandos 600 in Downlink-Richtung sollen in regelmäßigen Abständen übertragen werden. Damit wird gewährleistet, dass beide Instanzen, d.h. der lokale und zentrale Anwendungsteil 100, 200, Kenntnisse über die jeweils verwendete Konfiguration haben und dies für ihre Konfigurationsadaptionsentscheidungen berücksichtigen können.

Zusätzlich kann durch wenigstens einen Anwendungsteil eine Modifikation der für die Übertragung im Mobilfunksystem angeforderten QoS-Attribute erfolgen. Die Änderung der Parameter erscheint insbesondere sinnvoll, wenn die Datenmenge der niedrigsten Konfiguration zu hoch ist, um die Übertragungszeitanforderungen einzuhalten. Hierzu soll speziell das für interaktive Dienste standardisierte QoS-Attribut Traffic Handling Priority verwendet werden und deren Wert z.B. von 3 auf 2 oder 1 erhöht werden. Diese Anpassung soll nicht auf die niedrigste Konfiguration eingeschränkt sein, sondern auch im Falle der Verwendung höherer Konfigurationen erfolgen.

Das vorgeschlagene Verfahren eröffnet interessante Geschäftsmodelle zwischen Mobilfunkbetreibern und Content-Providern. Trotz des fehlenden direkten Zugriffs auf die Einstellmöglichkeiten des Übertragungssystems kann der Provider dennoch seinen Kunden entsprechende QoS-Merkmale offerieren und funktionserfüllende Applikationen weitestgehend unabhängig von der Auslastung des Kommunikationsnetzes anbieten. Mobilfunk- und Festnetzbetreiber profitieren davon, dass sie die Datenübertragung für Kunden bereitstellen können, ohne dem Provider Eingriff in die Vergabe der Übertragungsressourcen geben zu müssen.

Das vorgestellte erfindungsgemäße Verfahren schlägt vor, das zu übertragende Datenvolumen unter Berücksichtigung der tatsächlichen Übertragungszeiten, der erforderlichen Maximaldauer und der bereitgestellten Übertragungstechnologie, zu adaptieren. Diese Entscheidung zur Adaption wird nicht innerhalb der Netzelemente des Mobilfunksystems getroffen, sondern separat davon in lokalen bzw. zentralen Anwendungen, die beispielsweise von Content-Providern angeboten werden. Für Content-Provider wird die Attraktivität gesteigert, neue M2M-/M2P-Dienste am Markt anzubieten und Mobilfunknetze als Übertragungsmedium zu nutzen.

Zudem definiert die Erfindung eine Vielzahl von auswählbaren Konfigurationen zur Übertragung von M2M-/M2P-Daten unterschiedlichen Datenvolumens. Die Konfigurationen legen einzelne Maßnahmen zur Reduzierung des zu übertragenden Datenvolumens fest. Zudem lassen sich einzelne Maßnahmen zu einer einzigen Konfiguration zusammenfassen.

**Patentansprüche**

1. Verfahren zur Datenübertragung, insbesondere zur Maschine-zu-Maschine-Kommunikation (M2M) und/oder Maschine-zu-Mensch-Kommunikation (M2P), zwischen einem auf wenigstens einem mobilen Endgerät (1, 2) ausgeführten lokalen Anwendungsteil und einem auf einem zentralen Server (7) ausgeführten zentralen Anwendungsteil über ein Funknetz (3, 4, 5), insbesondere ein Mobilfunknetz, so dass eine anwendungsgetriebene Adaption, also vom lokalen Anwendungsteil auf dem mobilen Endgerät oder vom zentralen Anwendungsteil auf dem zentralen Server, des zu übertragenden Datenvolumens in Abhängigkeit von der zur Verfügung stehenden Übertragungstechnologie ausgeführt und die Adaption des zu übertragenden Datenvolumens unter Berücksichtigung der anwendungsbedingten maximalen Übertragungszeit erfolgt.

2. Verfahren nach einem der vorhergehenden Ansprüche, **dadurch gekennzeichnet, dass** die tatsächliche Übertragungszeit der Gesamtsumme und/oder einer Teilsumme aus der benötigte Übertragungszeit in Up- und Downlink sowie der Verarbeitungszeit im zentralen Server (7) bzw. lokalen Endgerät (1, 2) entspricht.

3. Verfahren nach einem der vorhergehenden Ansprüche, **dadurch gekennzeichnet, dass** der zentrale und/oder lokale Anwendungsteil aus der Differenz zwischen Anfangszeitpunkt der Übertragung und Empfangsquittierungszeitpunkt die tatsächliche Übertragungsdauer im Up- und/oder Downlink berechnet.

4. Verfahren nach einem der vorhergehenden Ansprüche, **dadurch gekennzeichnet, dass** der lokale und/oder zentrale Anwendungsteil den verwendeten Funkstandard und die entsprechende maximal mögliche Durchsatzrate kennt und/oder vor und/oder während der Datenübertragung über Änderungen des verwendeten Funkstandards bzw. der maximal möglichen Durchsatzrate informiert wird.

5. Verfahren nach einem der vorhergehenden Ansprüche, **dadurch gekennzeichnet, dass** wenigstens zwei auswählbare Konfigurationen für die Datenübertragung zur Verfügung stehen und wenigstens eine Konfiguration die Übertragung von Rohinformationen, komprimierten Informationen, codierten Informationen oder Deltainformationen vorsieht.

6. Verfahren nach einem der vorhergehenden Ansprüche, **dadurch gekennzeichnet, dass** wenigstens zwei auswählbare Konfigurationen für die Datenübertragung zur Verfügung stehen und wenigstens eine Konfiguration ein Umschalten zwischen kontinuierlicher und diskontinuierlicher Datenübertragung, insbesondere per Polling-Verfahren, und/oder eine Priorisierung der zu übertragenden Datenvolumen vorsieht.

7. Verfahren nach einem der vorhergehenden Ansprüche, **dadurch gekennzeichnet, dass** aus der anwendungsbedingten maximalen Übertragungsdauer und der maximal möglichen Durchsatzrate ein maximal mögliches Datenvolumen während einer Zeitdauer bestimmt wird und gegebenenfalls eine initiale Adaption des während der Zeitdauer zu übertragenden Datenvolumens erfolgt, vorzugsweise durch Auswahl einer geeigneten Konfiguration.

8. Verfahren nach einem der vorhergehenden Ansprüche, **dadurch gekennzeichnet, dass** eine dynamische Adaption des zu übertragenden Datenvolumens während der Datenübertragung erfolgt, vorzugsweise mittels Umschalten zwischen wenigstens zwei Konfigurationen mit unterschiedlichen zu übertragenden Datenmengen.

9. Verfahren nach Anspruch 8, **dadurch gekennzeichnet, dass** der Umschaltvorgang auf Grundlage eines schwellwertgesteuerten Algorithmus, vorzugsweise auf Grundlage eines schwellwertgesteuerten Algorithmus mit Hysterese, erfolgt, wobei vorzugsweise die Differenz zwischen anwendungsbedingter maximaler Übertragungsdauer und tatsächlicher Übertragungsdauer gegen einen Schwellwert verglichen wird.

10. Verfahren nach Anspruch 8 oder 9, **dadurch gekennzeichnet, dass** der Umschaltvorgang zusätzlich oder alternativ ereignisgetriggert erfolgt.

11. Verfahren nach einem der Ansprüche 5 bis 10, **dadurch gekennzeichnet, dass** sich die Anwendungsteile der mobilen Endgeräte und zentralen Server die Auswahl bzw. das Umschalten einer Konfiguration gegenseitig signalisieren und/oder vorschlagen und/oder vorgeben können.

12. Verfahren nach einem der vorhergehenden Ansprüche, **dadurch gekennzeichnet, dass** zusätzlich bestimmte QoS-Anforderungen an das Netz gestellt werden können und bestimmte Werte für die innerhalb des Funknetzes (3, 4, 5) verwendeten QoS-Parameter angefordert werden können.

13. Kommunikationssystem, insbesondere zur M2M- und/oder M2P-Kommunikation, mit einem auf wenigstens einem mobilen Gerät (1, 2) lokal ausgeführten Anwendungsteil und einem auf wenigstens einem zentralen Server (7) ausgeführten Anwendungsteil, **dadurch gekennzeichnet, dass** die Datenübertragung nach einem Verfahren gemäß einem der Ansprüche 1 bis 12 erfolgt.

14. Kommunikationssystem nach Anspruch 13, **dadurch gekennzeichnet, dass** das wenigstens eine mobile Endgerät (1, 2) wenigstens einen Sensor und/oder eine Kamera aufweist oder mit diesem bzw. dieser mittelbar/unmittelbar verbunden bzw. verbindbar ist und die durch die Sensorik und/oder Kamera bereitgestellten Daten mittels des Verfahrens übertragen werden.

15. Auf einem Datenträger gespeicherte Anwendung bzw. Anwendungsteil zur Durchführung des Verfahrens nach einem der Ansprüche 1 bis 12.

**Claims**

1. A method of data transmission, in particular for machine-to-machine communication (M2M) and/or machine-to-people communication (M2P), between a local application part executed on at least one mobile end device (1, 2) and a central application part executed on a central server (7) over a radio network (3, 4, 5), in particular a mobile communications network, so that an application driven adaptation, that is an adaption by the local application part on the mobile end device or an adaptation by the central application part on the central server, of the data volume to be transmitted is executed in dependence on the available transmission technology and the adaptation of the data volume to be transmitted takes place while taking account of the maximum transmission time determined by the application.

2. A method in accordance with one of the preceding claims, **characterized in that** the actual transmission time corresponds to the total and/or to a sub-total of the required transmission time in the uplink and downlink and of the processing time on the central server (7) or on the local end device (1, 2).

3. A method in accordance with one of the preceding claims, **characterized in that** the central and/or local application part(s) calculates the actual transmission duration in the uplink and/or downlink from the difference between the starting point in time of the transmission and the handshake point in time.

4. A method in accordance with one of the preceding claims, **characterized in that** the local and/or central application part(s) is aware of the used radio standard and of the corresponding maximum possible transfer rate and/or is informed of changes of the used radio standard or of the maximum possible transfer rate before and/or during the data transmission.

5. A method in accordance with one of the preceding claims, **characterized in that** at least two selectable configurations are available for the data transmission and at least one configuration provides for the transmission of raw information, compressed information, coded information, or detailed information.

6. A method in accordance with one of the preceding claims, **characterized in that** at least two selectable configurations are available for the data transmission and at least one configuration provides for a switchover between continuous and discontinuous data transmission, in particular by a polling process, and/or provides for a prioritizing of the data volumes to be transmitted.

7. A method in accordance with one of the preceding claims, **characterized in that** a maximum possible data volume during a time duration is determined from the maximum transmission duration determined by the application and from the maximum possible transfer rate and, optionally, an initial adaptation of the data volume to be transmitted during the time duration takes place, preferably by selection of a suitable configuration.

8. A method in accordance with one of the preceding claims, **characterized in that** a dynamic adaptation of the data volume to be transmitted takes place during the data transmission, preferably by means of switching between at least two configurations having different data amounts to be transmitted.

9. A method in accordance with claim 8, **characterized in that** the switching procedure takes place on the basis of a threshold value-controlled algorithm, preferably on the basis of a threshold-value controlled algorithm using hysteresis, with the difference between a maximum transmission duration determined by the application and the actual transmission duration being compared with a threshold value.

10. A method in accordance with claim 8 or claim 9, **characterized in that** the switching procedure additionally or alternatively takes place in an event-triggered manner.

11. A method in accordance with one of the claims 5 to 10, **characterized in that** the application parts of the mobile end devices and the central servers can mutually signal and/or propose and/or specify the selection or the switchover of a configuration.

12. A method in accordance with one of the preceding claims, **characterized in that** additional specific QoS requirements can be made on the network and specific values can be required for the QoS parameters used within the radio network (3, 4, 5).

13. A communications system, in particular for M2M and/or M2P communication, comprising an application part executed locally on at least one mobile device (1, 2) and an application part executed on at least one central server (7), **characterized in that** the data transmission takes place in accordance with a method in accordance with one of the claims 1 to 12.

14. A communications system in accordance with claim 13, **characterized in that** the at least one mobile end device (1, 2) has at least one sensor and/or a camera or is indirectly/directly connected or connectable thereto; and **in that** the data provided by the sensor system and/or camera are transmitted by means of the method.

15. An application or application part stored on a data carrier for carrying out the method in accordance with one of the claims 1 to 12.

**Revendications**

1. Procédé de transfert de données, en particulier pour la communication de machine à machine (M2M) et/ou la communication de machine à personne (M2P), entre une partie d'application locale exécutée sur au moins un terminal mobile (1, 2) et une partie d'application centralisée exécutée sur un serveur central (7) par le biais d'un réseau de radiocommunication (3, 4, 5), en particulier un réseau de téléphonie mobile, de sorte qu'une adaptation provoquée par l'application, autrement dit par la partie d'application locale sur le terminal mobile ou par la partie d'application centralisée sur le serveur central, du volume de données à transférer est exécutée en fonction de la technologie de transfert se trouvant à disposition et l'adaptation du volume de données à transférer est effectuée en tenant compte de la durée de transfert maximale conditionnée par l'application.

2. Procédé selon l'une des revendications précédentes, **caractérisé en ce que** la durée de transfert réelle correspond à la somme totale et/ou une somme partielle de la durée de transfert nécessaire en liaison montante et descendante ainsi que de la durée de traitement dans le serveur central (7) ou le terminal local (1, 2).

3. Procédé selon l'une des revendications précédentes, **caractérisé en ce que** la partie d'application centralisée et/ou locale calcule la durée de transfert réelle dans la liaison montante et/ou descendante à partir de la différence entre l'instant de début du transfert et l'instant d'acquittement de la réception.

4. Procédé selon l'une des revendications précédentes, **caractérisé en ce que** la partie d'application locale et/ou centralisée connaît la norme de radiocommunication utilisée et la vitesse de transfert maximale possible correspondante et/ou est informée avant et/ou pendant le transfert de données de modifications de la norme de radiocommunication utilisée ou de la vitesse de transfert maximale possible.

5. Procédé selon l'une des revendications précédentes, **caractérisé en ce qu'**au moins deux configurations sélectionnables sont à disposition pour le transfert de données et au moins une configuration prévoit le transfert d'informations brutes, d'informations comprimées, d'informations codées ou d'informations Delta.

6. Procédé selon l'une des revendications précédentes, **caractérisé en ce qu'**au moins deux configurations sélectionnables sont à disposition pour le transfert de données et au moins une configuration prévoit une commutation entre transfert de données continu et discontinu, en particulier par procédé d'invitation à émettre, et/ou une priorisation du volume de données à transférer.

7. Procédé selon l'une des revendications précédentes, **caractérisé en ce qu'**un volume de données maximal possible pendant une période est déterminé à partir de la durée de transfert maximale conditionnée par l'application et de la vitesse de transfert maximale possible et le cas échéant, une adaptation initiale du volume de données à transférer pendant la période est effectuée, de préférence par la sélection d'une configuration adaptée.

8. Procédé selon l'une des revendications précédentes, **caractérisé en ce qu'**une adaptation dynamique du volume de données à transférer est effectuée pendant le transfert de données, de préférence au moyen d'une commutation entre au moins deux configurations avec différentes quantités de données à transférer.

9. Procédé selon la revendication 8, **caractérisé en ce que** le processus de commutation est effectué sur la base d'un algorithme commandé par valeur seuil, de préférence sur la base d'un algorithme commandé par valeur seuil avec hystérésis, la différence entre la durée de transfert maximale conditionnée par l'application et la durée de transfert réelle étant comparée à une valeur seuil.

10. Procédé selon la revendication 8 ou 9, **caractérisé en ce qu'**en plus ou en variante, le processus de commutation est effectué de manière déclenchée par un événement.

11. Procédé selon l'une des revendications 5 à 10, **caractérisé en ce que** les parties d'application des terminaux mobiles et serveurs centraux peuvent signaler et/ou proposer et/ou définir mutuellement la sélection ou la commutation d'une configuration.

12. Procédé selon l'une des revendications précédentes, **caractérisé en ce que** certaines exigences de QoS peuvent en plus être imposées au réseau et certaines valeurs pour les paramètres de QoS utilisés au sein du réseau de radiocommunication (3, 4, 5) peuvent être exigées.

13. Système de communication, en particulier pour la communication M2M et/ou M2P, comprenant une partie d'application exécutée localement sur au moins un appareil mobile (1, 2) et une partie d'application exécutée sur au moins un serveur central (7), **caractérisé en ce que** le transfert de données est effectué selon un procédé selon l'une des revendications 1 à 12.

14. Système de communication selon la revendication 13, **caractérisé en ce que** l'au moins un terminal mobile (1, 2) comporte au moins un capteur et/ou une caméra ou est ou peut être relié indirectement/directement à celui-ci ou celle-ci et les données mises à disposition par le système de capteur et/ou la caméra sont transférées au moyen du procédé.

15. Application ou partie d'application enregistrée sur un support de données pour exécuter le procédé selon l'une des revendications 1 à 12.

**Figur 1**

**Figur 2**

# Figur 3

Erfolgt
die erstmalige
Datenübertragung
oder erfolgte ein Wechsel
der Mobilfunktechnologie ?

10

nein

ja

20

Festlegung der maximalen
Konfiguration anhand der
verfügbaren
Mobilfunktechnologie.

30

Prozedur zur Adaption der
Konfiguration gemäß Figur 4.

## Figur 4

```
┌─────────────────────────┐
│   Festlegung der maximalen │
│   Konfiguration anhand der │
│        verfügbaren         │
│   Mobilfunktechnologie.    │
└─────────────────────────┘
```

1. Abfrage

Wird die geforderte Übertragungsdauer gemäß Bedingung 1 eingehalten?                40

nein → Wechsel zu einer Konfiguration geringerer Datenmenge.                70

ja

2. Abfrage

Ist ein Wechsel auf eine Konfiguration höherer Datenmenge gemäß Bedingung 2 möglich?                50

nein

ja

Wechsel zu einer Konfiguration höherer Datenmenge.                60

**Figur 5**

**Figur 6**

EP 2 683 184 B1

**Figur 7**

**EP 2 683 184 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1237387 A1